(19) Europäisches Patentamt / European Patent Office / Office européen des brevets

(11) **EP 4 096 104 B1**

(12) **EUROPEAN PATENT SPECIFICATION**

(45) Date of publication and mention of the grant of the patent:
**22.01.2025 Bulletin 2025/04**

(21) Application number: **22754278.4**

(22) Date of filing: **25.02.2022**

(51) International Patent Classification (IPC):
*H04B 3/54* (2006.01)     *H04L 25/03* (2006.01)

(52) Cooperative Patent Classification (CPC):
**H04B 3/54; H04B 3/06; H04L 25/03343; H04L 27/367;** H04B 2203/5425; H04L 5/0053

(86) International application number:
**PCT/CN2022/077869**

(87) International publication number:
**WO 2022/174841 (25.08.2022 Gazette 2022/34)**

(54) **NON-LINEAR PRE-EQUALIZATION APPARATUS AND METHOD FOR G3-PLC LINE SYSTEM**

NICHTLINEARER VORVERZERRER UND VERFAHREN FÜR EIN G3-PLC-LEITUNGSSYSTEM

APPAREIL ET PROCÉDÉ DE PRÉ-ÉGALISATION NON LINÉAIRE POUR UN SYSTÈME DE LIGNE G3-PLC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 CN 202111164301**

(43) Date of publication of application:
**30.11.2022 Bulletin 2022/48**

(73) Proprietor: **Hangzhou Vango Technologies, Inc.**
**Hangzhou, Zhejiang 310053 (CN)**

(72) Inventors:
• **ZHANG, Hongliang**
**Hangzhou, Zhejiang 310053 (CN)**

• **QIAN, Haifeng**
**Hangzhou, Zhejiang 310053 (CN)**

(74) Representative: **HGF**
**HGF Limited**
**1 City Walk**
**Leeds LS11 9DX (GB)**

(56) References cited:
EP-A1- 1 956 782      EP-A2- 1 517 498
CN-A- 103 078 657      CN-A- 108 600 128
CN-A- 112 532 549      CN-A- 113 949 416
KR-B1- 100 296 982     US-A1- 2003 058 959
US-A1- 2014 313 946     US-A1- 2017 163 350
US-A1- 2019 181 895

**Description**

**TECHNICAL FIELD**

The present invention belongs to the field of carrier communication, and, more particularly, to a nonlinear pre-equalization device and method for a G3-PLC power carrier line system.

**BACKGROUND**

In the prior art, Power line Communication (G3-PLC) is based on signal equalization at a receiving end, that is, after the receiving end receives the signal from a transmitting end and successfully demodulates the signal, the receiving end may feed a channel equalization coefficient back to the transmitting end, and the transmitting end may generate a pre-equalization coefficient according to this feedback. Because of the severe interference on the power line, in some cases, the receiving end can't demodulate the signal from the transmitting end, and in this case, the transmitting end may not generate the pre-equalization coefficient.

A G3-PLC power carrier signal may generate nonlinear distortion at a transmitter end, which is called local channel response of the transmitter. This nonlinear distortion may seriously affect the signal quality and increase the complexity and difficulty of the receiving end. Therefore, it is very meaningful to eliminate or reduce the nonlinear distortion of the signal at the transmitting end without affecting the transmitting power.

United States Patent Publication No. US2019181895 discloses non-linear interference cancellation for baseband transceivers. Furthermore,

United States Patent Publication No. US2014313946A1 discloses Non-linear interference cancellation techniques for wireless transceivers. In US2014313946A1, the disclosed Non-linear reduction of interference of a transmit signal on a received signal in a transceiver device, comprises applying the transmit signal to a first non-linear system; applying the received signal to a second non-linear system; and subtracting an output of the first non-linear system output from an output of second non-linear system output to produce an interference mitigated received signal. The first non-linear system and/or the second non-linear system can be to implemented using one or more of a Volterra series and a Generalized Memory Polynomial Model. System parameters of the first non-linear system and/or the second non-linear system are adapted to reduce a power of the interference mitigated received signal.

**SUMMARY**

Object of the present invention: the technical problem to be solved by the present invention is to provide a nonlinear pre-equalization device and method for a G3-PLC power carrier line system aiming at the deficiencies of the prior art.

To solve the above technical problems, in a first aspect, a nonlinear pre-equalization device for a G3-PLC power carrier line system is disclosed, which is applied to a transmitting end of the G3-PLC power carrier line system, and comprises a G3-PLC baseband data module, a nonlinear pre-equalization implementation module, a DA (Digital-to-Analogue) digital-to-analogue conversion module, a local channel nonlinear response module, an AD (Analogue-to-Digital) analogue-to-digital conversion module and a nonlinear pre-equalization coefficient calculation module, wherein:

the G3-PLC baseband data module is used for generating G3-PLC baseband data and sending the G3-PLC baseband data to the nonlinear pre-equalization implementation module;

the nonlinear pre-equalization implementation module is used for performing nonlinear pre-equalization on the G3-PLC baseband data to obtain pre-equalization data, and sending the pre-equalization data to the DA digital-to-analogue conversion module and the nonlinear pre-equalization coefficient calculation module; and a nonlinear pre-equalization response of the nonlinear pre-equalization implementation module is capable of offsetting nonlinear response distortion generated by the local channel nonlinear response module in advance;

the DA digital-to-analogue conversion module is used for converting the pre-equalization data into an analog signal and sending the analog signal to the local channel nonlinear response module;

the local channel nonlinear response module is used for filtering, amplifying and coupling the analog signal to a power line to obtain a transmitted signal, and sending the transmitted signal to the AD analogue-to-digital conversion module and a receiving end of the G3-PLC power carrier line system via a receiving circuit;

the AD analogue-to-digital conversion module is used for converting the transmitted signal into a digital signal and sending the digital signal to the nonlinear pre-equalization coefficient calculation module; and

the nonlinear pre-equalization coefficient calculation module is used for calculating and obtaining the pre-equalization coefficient according to the input digital signal and pre-equalization data, and feeding the pre-equalization coefficient back to the nonlinear pre-equalization implementation module, wherein the pre-equalization coefficient is used for nonlinear pre-equalization.

With reference to the first aspect, in an implementation mode, the local channel nonlinear response module comprises a transmitting end analogue filter, a line driver and a local transmitting power line, and the analog signal is input into the transmitting end analogue filter for signal filtering, so as to filter out-of-band spurious signals and obtain the filtered analog signal; inputting the filtered analog signal into the line driver for signal amplification to obtain the amplified analog signal; and coupling the amplified analog signal to the local transmitting power line to obtain a transmitted signal.

With reference to the first aspect, in an implementation mode, a reverse curve of the nonlinear pre-equalization response of the nonlinear pre-equalization implementation module is the same as that of the local channel nonlinear response of the local channel nonlinear response module. The two channel responses are consolidated to form a linear channel response, and the nonlinear pre-equalization response can offset the nonlinear response distortion generated by the local channel nonlinear response module in advance, so that the signal quality received by the receiving end can be greatly improved and a decoding success rate of the receiving end can be improved.

With reference to the first aspect, in an implementation mode, the nonlinear response distortion generated by the local channel nonlinear response module comprises nonlinear distortion of the transmitting end analogue filter, nonlinear distortion of the line driver and nonlinear distortion generated by load mismatch of the local transmitting power line, and the nonlinear distortion comprises nonlinear distortion of amplitudes, phases and multi-paths.

Due to the manufacturing reasons, the amplitude and phase transformation of the transmitting end analogue filter is not strictly linear transformation, so the nonlinear distortion may be generated. Theoretically, the line driver is in a certain output range, and the output signal is a linear amplification of the input signal, and this output range may change with the change of temperature. However, in practical application, a peak value of the data may exceed a working range of the line driver, resulting in severe nonlinear amplification, and electronic devices of the line driver also have memory effect, which may also cause phase nonlinear transformation of the output signal. For the local transmitting power line, the load fluctuation of a power grid and the dynamic change of a network topology may also have a great impact on the signal, and this impact also includes the nonlinearity of amplitudes and phases.

In a second aspect, a nonlinear pre-equalization method for a G3-PLC power carrier line system is disclosed, comprising the following steps of:

    step 1: carrying out nonlinear pre-equalization on G3-PLC baseband data to obtain pre-equalization data;
    step 2: converting the pre-equalization data into an analog signal, and sending the analog signal to a local channel nonlinear response module to obtain a transmitted signal;
    step 3: converting the transmitted signal into a digital signal, and sending the digital signal to a nonlinear pre-equalization coefficient calculation module; and calculating a pre-equalization coefficient according to the digital signal and the pre-equalization data; and
    step 4: feeding back the pre-equalization coefficient to a nonlinear pre-equalization implementation module to obtain a nonlinear pre-equalization response.

With reference to the second aspect, in an implementation mode, the pre-equalization coefficient in step 3 is a nonlinear pre-equalization response coefficient of the nonlinear pre-equalization implementation module, which is calculated and acquired according to a reverse curve of the local channel nonlinear response of the local channel nonlinear response module. The obtained nonlinear pre-equalization response coefficient is used for performing nonlinear pre-equalization on the G3-PLC baseband data, which can offset the nonlinear response distortion generated by the local channel nonlinear response module in advance, so that the signal quality received by the receiving end can be greatly improved and a decoding success rate of the receiving end can be improved.

With reference to the second aspect, in an implementation mode, the pre-equalization coefficient in step 3 is calculated and acquired by matrix decomposition.

With reference to the second aspect, in an implementation mode, the pre-equalization data in step 1 is recorded as $\{B(n)\}_{n=1}^{N}$, the digital signal in step 3 is recorded as $\{A(n)\}_{n=1}^{N}$, $N$ is a sample number of the pre-equalization data and the digital signal, $n$ is a sample point, $1 \leq n \leq N$, the pre-equalization coefficient is recorded as $a_{kq}$, $k$ represents a nonlinear parameter, $q$ meter represents a multi-path parameter, $1 \leq k \leq K$, $0 \leq q \leq Q - 1$, $K$ represents a maximum order of the nonlinear distortion of amplitudes, Q represents a maximum order of the nonlinear distortion of phases, and $1 \leq K \leq 6$, $1 \leq Q \leq 6$;

    the reverse curve of the local channel nonlinear response is recorded as that $B(n) = f(A(n))$, and the pre-equalization coefficient obtained in step 3 according to the digital signal and the pre-equalization data is the formula (1):

$$B(n) = f\big(A(n)\big) = \sum_{k=1}^{K} \sum_{q=0}^{Q-1} a_{kq} A(n-q)^{(k-1)} \quad (1)$$

the formula (1) is expanded into the formula (2):

$$B(Q) = \sum_{k=1}^{K} \sum_{q=0}^{Q-1} a_{kq} A(Q-q)^{(k-1)}$$

$$B(Q+1) = \sum_{k=1}^{K} \sum_{q=0}^{Q-1} a_{kq} A(Q+1-q)^{(k-1)} \qquad (2)$$

$$\cdots$$

$$B(N) = \sum_{k=1}^{K} \sum_{q=0}^{Q-1} a_{kq} A(N-q)^{(k-1)}$$

the formula (2) is consolidated as the formula (3):

$$[B(Q), B(Q+1), \cdots, B(N)] = M * \left( \sum_{k=1}^{K} \sum_{q=0}^{Q-1} a_{kq} \right) \quad (3)$$

wherein, the matrix $M$ is a matrix composed of the digital signal $\{A(n)\}_{n=1}^{N}$ according to the formula (2), with a size of $(N-Q)*(K*Q)$;
the formula (3) is transformed to obtain the formula (4):

$$\sum_{k=1}^{K} \sum_{q=0}^{Q-1} a_{kq} = \big((M^T M)^{-1} M^T\big) * [B(Q), B(Q+1), \cdots, B(N)] \quad (4)$$

the pre-equalization coefficient $a_{kq}$ is solved according to the formula (4).

With reference to the second aspect, in an implementation mode, the nonlinear pre-equalization coefficient calculation module calculates the pre-equalization coefficient $a_{kq}$ once every time T; in order to update the device temperature in real time and channel transformation caused by network topology transformation, the pre-equalization coefficient $a_{kq}$ needs to be updated once at a maximum interval of 1 minute, i.e., $T$ is less than or equal to 1 minute; and in step 4, the nonlinear pre-equalization implementation module updates the nonlinear pre-equalization response according to the pre-equalization coefficient $a_{kq}$, the G3-PLC baseband data in step 1 is recorded as $\{C(n)\}_{n=1}^{N}$, and the nonlinear pre-equalization response is the formula (5):

$$B(n) = z\big(C(n)\big) = \sum_{k=1}^{K} \sum_{q=0}^{Q-1} a_{kq} C(n-q)^{(k-1)} \quad (5).$$

The pre-equalization coefficient $a_{kq}$ is calculated once every time T, and the linear pre-equalization response is updated to adapt to the channel change of the transmitting device due to factors such as aging, temperature change or power change.
With reference to the second aspect, in an implementation mode, the sample number N of the pre-equalization data and the digital signal is 2048, the maximum order K of the nonlinear distortion of amplitudes is 5, and the maximum order $Q$ of the nonlinear distortion of phases is 4.

Beneficial effects:

The problem to be solved by the present application is to add one nonlinear pre-equalization implementation module before the signal is sent to the DA analogue-to-digital conversion module. The channel response of the nonlinear pre-equalization implementation module is opposite to the local channel nonlinear response of the transmitter, that is, the nonlinear pre-equalization response can offset the nonlinear response distortion generated by the local channel nonlinear response module in advance. Such two channel responses are combined to form one linear channel response. After the G3-PLC baseband data of the G3-PLC transmitting end passes through the nonlinear pre-equalization implementation module and the local channel nonlinear response module, the transmitted signal is the signal after distortion compensation.

The present application is based on a local feedback pre-equalization method. The signal transmitted by the transmitting end is received through a receiving link on the local transmitting power line, and then the pre-equalization coefficient is generated by operation according to the transmitted signal and the received signal, so as to correct the distortion of phases, amplitudes and multi-paths caused by the load matching of the transmitting end analogue filter, the line driver and the local transmitting power line. In this way, the signal quality received by the receiving end can be greatly improved, and the decoding success rate of the receiving end can be improved.

In this application, as the nonlinear pre-equalization implementation module is added before the local channel nonlinear response module, the transmission power of the line driver in the local channel nonlinear response module is increased, and the distortion of the transmitted signal will not be increased, thus improving an effective working area of the line driver.

## BRIEF DESCRIPTION OF THE DRAWINGS

The advantages of the above and/or other aspects of the present invention will become more apparent by further explaining the present invention with reference to the following drawings and detailed description.

FIG. 1 is a schematic structural diagram of a nonlinear pre-equalization device for a G3-PLC power carrier line system provided by an embodiment of the present application.

FIG. 2 is a flow chart of a nonlinear pre-equalization method for a G3-PLC power carrier line system provided by an embodiment of the present application.

## DETAILED DESCRIPTION

The embodiments of the present invention will be described hereinafter with reference to the drawings.

Embodiments of the present application provide a nonlinear pre-equalization device and method for a G3-PLC power carrier line system, which may be applied to application scenarios such as remote data acquisition of meters, remote control of household appliances, data analysis and processing of control systems: 1. capable of collecting remote data of various meters; 2. capable of being connected with various household appliances by a G3-PLC, and then connecting the G3-PLC with the Internet to realize remote control; $_{and}$ 3. big data analysis and processing, wherein the G3-PLC can complete data collection, analysis and processing, such as mathematical operation, data transmission, data conversion, sorting, table lookup and bit operation, or the like, and these data can be compared with reference values stored in the memory, so as to complete certain control operations. Data processing is often used in large control systems.

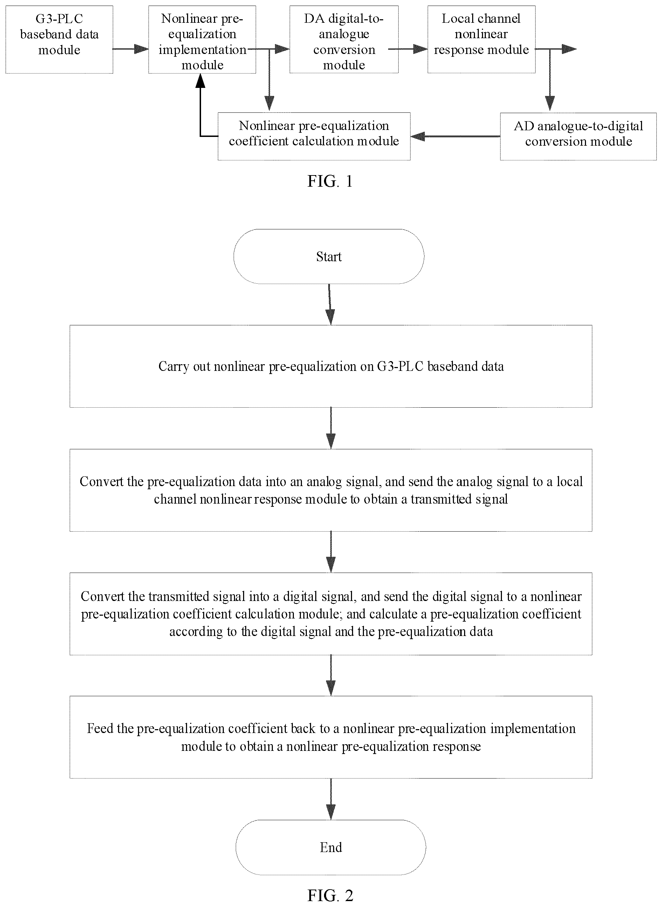

As shown in FIG. 1, a first embodiment of the present application discloses a nonlinear pre-equalization device for a G3-PLC power carrier line system applied to a transmitting end of the G3-PLC power carrier line system, comprising a G3-PLC baseband data module, a nonlinear pre-equalization implementation module, a DA digital-to-analogue conversion module, a local channel nonlinear response module, an AD analogue-to-digital conversion module and a nonlinear pre-equalization coefficient calculation module, wherein:

the G3-PLC baseband data module is used for generating G3-PLC baseband data and sending the G3-PLC baseband data to the nonlinear pre-equalization implementation module;

the nonlinear pre-equalization implementation module is used for performing nonlinear pre-equalization on the G3-PLC baseband data to obtain pre-equalization data, and sending the pre-equalization data to the DA digital-to-analogue conversion module and the nonlinear pre-equalization coefficient calculation module; and a nonlinear pre-equalization response of the nonlinear pre-equalization implementation module is capable of offsetting nonlinear response distortion generated by the local channel nonlinear response module in advance;

the DA digital-to-analogue conversion module is used for converting the pre-equalization data into an analog signal and sending the analog signal to the local channel nonlinear response module;

the local channel nonlinear response module is used for filtering, amplifying and coupling the analog signal to a power line to obtain a transmitted signal, and sending the transmitted signal to the AD analogue-to-digital conversion module and a receiving end of the G3-PLC power carrier line system;

the AD analogue-to-digital conversion module is used for converting the transmitted signal into a digital signal and sending the digital signal to the nonlinear pre-equalization coefficient calculation module; and

the nonlinear pre-equalization coefficient calculation module is used for calculating and obtaining the pre-equalization coefficient according to the input digital signal and pre-equalization data, and feeding the pre-equalization coefficient back to the nonlinear pre-equalization implementation module, wherein the pre-equalization coefficient is used for nonlinear pre-equalization.

In the first embodiment, the local channel nonlinear response module comprises a transmitting end analogue filter, a line driver and a local transmitting power line, and the analog signal is input into the transmitting end analogue filter for signal filtering, so as to filter out-of-band spurious signals and obtain the filtered analog signal; inputting the filtered analog signal into the line driver for signal amplification to obtain the amplified analog signal; and coupling the amplified analog signal to the local transmitting power line to obtain a transmitted signal.

In the first embodiment, a reverse curve of the nonlinear pre-equalization response of the nonlinear pre-equalization implementation module is the same as that of the local channel nonlinear response of the local channel nonlinear response module.

In the first embodiment, the nonlinear response distortion generated by the local channel nonlinear response module comprises nonlinear distortion of the transmitting end analogue filter, nonlinear distortion of the line driver and nonlinear distortion generated by load mismatch of the local transmitting power line, and the nonlinear distortion comprises nonlinear distortion of amplitudes, phases and multi-paths.

As shown in FIG. 2, a second embodiment of the present application discloses a nonlinear pre-equalization method for a G3-PLC power carrier line system, comprising the following steps of:

step 1: carrying out nonlinear pre-equalization on G3-PLC baseband data to obtain pre-equalization data;

step 2: converting the pre-equalization data into an analog signal, and sending the analog signal to a local channel nonlinear response module to obtain a transmitted signal;

step 3: converting the transmitted signal into a digital signal, and sending the digital signal to a nonlinear pre-equalization coefficient calculation module; and calculating a pre-equalization coefficient according to the digital signal and the pre-equalization data; and

step 4: feeding back the pre-equalization coefficient to a nonlinear pre-equalization implementation module to obtain a nonlinear pre-equalization response.

In the second embodiment, the pre-equalization coefficient in step 3 is a nonlinear pre-equalization response coefficient of the nonlinear pre-equalization implementation module, which is calculated and acquired according to a reverse curve of the local channel nonlinear response of the local channel nonlinear response module.

In the second embodiment, the pre-equalization coefficient in step 3 is calculated and acquired by matrix decomposition.

In the second embodiment, the pre-equalization data in step 1 is recorded as $\{B(n)\}_{n=1}^{N}$, and an input end of the DA digital-to-analogue conversion module can record the pre-equalization data; the digital signal in step 3 is recorded as $\{A(n)\}_{n=1}^{N}$, and an output end of the AD analogue-to-digital conversion module can record the digital signal; N is a sample number of the pre-equalization data and the digital signal, $n$ is a sample point, $1 \leq n \leq N$, the pre-equalization coefficient is recorded as $a_{kq}$, $k$ represents a nonlinear parameter, $q$ meter represents a multi-path parameter, $1 \leq k \leq K$, $0 \leq q \leq Q - 1$, $K$ represents a maximum order of the nonlinear distortion of amplitudes, Q represents a maximum order of the nonlinear distortion of phases, and $1 \leq K \leq 6$, $1 \leq Q \leq 6$;

the reverse curve of the local channel nonlinear response is recorded as that $B(n) = f(a(n))$, and the pre-equalization coefficient obtained in step 3 according to the digital signal and the pre-equalization data is the formula (1):

$$B(n) = f\big(A(n)\big) = \sum_{k=1}^{K}\sum_{q=0}^{Q-1} a_{kq}A(n-q)^{(k-1)} \quad (1)$$

the formula (1) is expanded into the formula (2):

$$B(Q) = \sum_{k=1}^{K} \sum_{q=0}^{Q-1} a_{kq} A(Q-q)^{(k-1)}$$

$$B(Q+1) = \sum_{k=1}^{K} \sum_{q=0}^{Q-1} a_{kq} A(Q+1-q)^{(k-1)} \tag{2}$$

$$\cdots$$

$$B(N) = \sum_{k=1}^{K} \sum_{q=0}^{Q-1} a_{kq} A(N-q)^{(k-1)}$$

the formula (2) is consolidated as the formula (3):

$$[B(Q), B(Q+1), \cdots, B(N)] = M * \left( \sum_{k=1}^{K} \sum_{q=0}^{Q-1} a_{kq} \right) \tag{3}$$

wherein, the matrix $M$ is a matrix composed of the digital signal $\{A(n)\}_{n=1}^{N}$ according to the formula (2), with a size of $(N-Q)*(K*Q)$;
the formula (3) is transformed to obtain the formula (4):

$$\sum_{k=1}^{K} \sum_{q=0}^{Q-1} a_{kq} = ((M^T M)^{-1} M^T) * [B(Q), B(Q+1), \cdots, B(N)] \tag{4}$$

the pre-equalization coefficient $a_{kq}$ is solved according to the formula (4).

In the second embodiment, in step 3, the nonlinear pre-equalization coefficient calculation module calculates the pre-equalization coefficient $a_{kq}$ once every time $T$, and $T$ is less than or equal to 1 minute; and in step 4, the nonlinear pre-equalization implementation module updates the nonlinear pre-equalization response according to the pre-equalization coefficient $a_{kq}$, the G3-PLC baseband data in step 1 is recorded as $\{C(n)\}_{n=1}^{N}$, and the nonlinear pre-equalization response is the formula (5):

$$B(n) = z\big(C(n)\big) = \sum_{k=1}^{K} \sum_{q=0}^{Q-1} a_{kq} C(n-q)^{(k-1)} \tag{5}$$

In the second embodiment, the sample number N of the pre-equalization data and the digital signal is 2048, the maximum order K of the nonlinear distortion of amplitudes is 5, and the maximum order $Q$ of the nonlinear distortion of phases is 4.
The present invention provides the nonlinear pre-equalization device and method for the G3-PLC power carrier line system. There are many methods and ways to realize the technical solutions. The above is only the specific embodiments of the present invention.
All the unspecified components in the embodiments can be realized by the prior art.

## Claims

1. A nonlinear pre-equalization device for a G3-PLC power carrier line system applied to a transmitting end of the G3-PLC power carrier line system, comprising a G3-PLC baseband data module, a nonlinear pre-equalization implementation module, a DA digital-to-analogue conversion module, a local channel nonlinear response module, an AD analogue-to-digital conversion module and a nonlinear pre-equalization coefficient calculation module, wherein:

the G3-PLC baseband data module is used for generating G3-PLC baseband data and sending the G3-PLC baseband data to the nonlinear pre-equalization implementation module;

the nonlinear pre-equalization implementation module is used for performing nonlinear pre-equalization on the G3-PLC baseband data to obtain pre-equalization data, and sending the pre-equalization data to the DA digital-to-analogue conversion module and the nonlinear pre-equalization coefficient calculation module; and a non-linear pre-equalization response of the nonlinear pre-equalization implementation module is capable of offsetting nonlinear response distortion generated by the local channel nonlinear response module in advance;

the DA digital-to-analogue conversion module is used for converting the pre-equalization data into an analog signal and sending the analog signal to the local channel nonlinear response module;

the local channel nonlinear response module is used for filtering, amplifying and coupling the analog signal to a power line to obtain a transmitted signal, and sending the transmitted signal to the AD analogue-to-digital conversion module and a receiving end of the G3-PLC power carrier line system;

the AD analogue-to-digital conversion module is used for converting the transmitted signal into a digital signal and sending the digital signal to the nonlinear pre-equalization coefficient calculation module; and

the nonlinear pre-equalization coefficient calculation module is used for calculating and obtaining the pre-equalization coefficient according to the input digital signal and pre-equalization data, and feeding the pre-equalization coefficient back to the nonlinear pre-equalization implementation module, wherein the pre-equalization coefficient is used for performing the nonlinear pre-equalization,

wherein the pre-equalization data is recorded as $\{B(n)\}_{n=1}^{N}$, the digital signal is recorded as $\{A(n)\}_{n=1}^{N}$, $N$ is a sample number of the pre-equalization data and the digital signal, n is a sample point, $1 \le n \le N$, the pre-equalization coefficient is recorded as $a_{kq}$, $k$ represents a nonlinear parameter, q represents a multi-path parameter, $1 \le k \le K$, $0 \le q \le Q - 1$, $K$ represents a maximum order of the nonlinear distortion of amplitudes, $Q$ represents a maximum order of the nonlinear distortion of phases, and $1 \le K \le 6$, $1 \le Q \le 6$;

a reverse curve of the local channel nonlinear response is recorded as that $B(n) = f(A(n))$, and the pre-equalization coefficient obtained in step 3 according to the digital signal and the pre-equalization data is the formula (1):

$$B(n) = f\big(A(n)\big) = \sum_{k=1}^{K} \sum_{q=0}^{Q-1} a_{kq} A(n-q)^{(k-1)} \quad (1)$$

the formula (1) is expanded into the formula (2):

$$B(Q) = \sum_{k=1}^{K} \sum_{q=0}^{Q-1} a_{kq} A(Q-q)^{(k-1)}$$

$$B(Q+1) = \sum_{k=1}^{K} \sum_{q=0}^{Q-1} a_{kq} A(Q+1-q)^{(k-1)} \qquad (2)$$

$$B(N) = \sum_{k=1}^{K} \sum_{q=0}^{Q-1} a_{kq} A(N-q)^{(k-1)}$$

the formula (2) is consolidated as the formula (3):

$$[B(Q), B(Q+1), \cdots, B(N)] = M * (\sum_{k=1}^{K} \sum_{q=0}^{Q-1} a_{kq}) \quad (3)$$

wherein, the matrix M is a matrix composed of the digital signal $\{A(n)\}_{n=1}^{N}$ according to the formula (2), with a size of $(N-Q)*(K*Q)$;

the formula (3) is transformed to obtain the formula (4):

$$\sum_{k=1}^{K}\sum_{q=0}^{Q-1} a_{kq} = ((M^T M)^{-1} M^T) * [B(Q), B(Q+1), \cdots, B(N)] \quad (4)$$

the pre-equalization coefficient $a_{kq}$ is solved according to the formula (4),
wherein the nonlinear pre-equalization coefficient calculation module calculates the pre-equalization coefficient $a_{kq}$ once every time $T$, and $T$ is less than or equal to 1 minute; and the nonlinear pre-equalization implementation module updates the nonlinear pre-equalization response according to the pre-equalization coefficient $a_{kq}$, the G3-PLC baseband data is recorded as $\{C(n)\}_{n=1}^{N}$, and the nonlinear pre-equalization response is the formula (5):

$$B(n) = z\big(C(n)\big) = \sum_{k=1}^{K} \sum_{q=0}^{Q-1} a_{kq} C(n-q)^{(k-1)} \quad (5).$$

2. The nonlinear pre-equalization device for the G3-PLC power carrier line system according to claim 1, wherein the local channel nonlinear response module comprises a transmitting end analogue filter, a line driver and a local transmitting power line, and the analog signal is input into the transmitting end analogue filter for signal filtering, so as to filter out-of-band spurious signals and obtain the filtered analog signal; inputting the filtered analog signal into the line driver for signal amplification to obtain the amplified analog signal; and coupling the amplified analog signal to the local transmitting power line to obtain a transmitted signal.

3. The nonlinear pre-equalization device for the G3-PLC power carrier line system according to claim 1, wherein the nonlinear response distortion generated by the local channel nonlinear response module comprises nonlinear distortion of the transmitting end analogue filter, nonlinear distortion of the line driver and nonlinear distortion generated by load mismatch of the local transmitting power line, and the nonlinear distortion comprises nonlinear distortion of amplitudes, phases and multi-paths.

4. A nonlinear pre-equalization method for a G3-PLC power carrier line system, comprising the following steps of:

   step 1: carrying out nonlinear pre-equalization on G3-PLC baseband data to obtain pre-equalization data;
   step 2: converting the pre-equalization data into an analog signal, and sending the analog signal to a local channel nonlinear response module to obtain a transmitted signal;
   step 3: converting the transmitted signal into a digital signal, and sending the digital signal to a nonlinear pre-equalization coefficient calculation module; and calculating a pre-equalization coefficient according to the digital signal and the pre-equalization data; and
   step 4: feeding back the pre-equalization coefficient to a nonlinear pre-equalization implementation module to obtain a nonlinear pre-equalization response,

wherein the pre-equalization data in step 1 is recorded as $\{B(n)\}_{n=1}^{N}$, the digital signal in step 3 is recorded as $\{A(n)\}_{n=1}^{N}$, $N$ is a sample number of the pre-equalization data and the digital signal, $n$ is a sample point, $1 \leq n \leq N$, the pre-equalization coefficient is recorded as $a_{kq}$, $k$ represents a nonlinear parameter, $q$ represents a multi-path parameter, $1 \leq k \leq K$, $0 \leq q \leq Q-1$, $K$ represents a maximum order of the nonlinear distortion of amplitudes, Q represents a maximum order of the nonlinear distortion of phases, and $1 \leq K \leq 6$, $1 \leq Q \leq 6$;

a reverse curve of the local channel nonlinear response is recorded as that $B(n) = f(A(n))$, and the pre-equalization coefficient obtained in step 3 according to the digital signal and the pre-equalization data is the formula (1):

$$B(n) = f\big(A(n)\big) = \sum_{k=1}^{K}\sum_{a=0}^{Q-1} a_{kq} A(n-q)^{(k-1)} \quad (1)$$

the formula (1) is expanded into the formula (2):

$$B(Q) = \sum_{k=1}^{K}\sum_{a=0}^{Q-1} a_{kq}A(Q-q)^{(k-1)}$$

$$B(Q+1) = \sum_{k=1}^{K}\sum_{q=0}^{Q-1} a_{kq}A(Q+1-q)^{(k-1)} \qquad (2)$$

$$B(N) = \sum_{k=1}^{K}\sum_{a=0}^{Q-1} a_{kq}A(N-q)^{(k-1)}$$

the formula (2) is consolidated as the formula (3):

$$[B(Q), B(Q+1), \cdots, B(N)] = M * \left(\sum_{k=1}^{K}\sum_{a=0}^{Q-1} a_{kq}\right) \qquad (3)$$

wherein, the matrix $M$ is a matrix composed of the digital signal $\{A(n)\}_{n=1}^{N}$ according to the formula (2), with a size of $(N-Q)*(K*Q)$;
the formula (3) is transformed to obtain the formula (4):

$$\sum_{k=1}^{K}\sum_{q=0}^{Q-1} a_{kq} = ((M^{T}M)^{-1}M^{T}) * [B(Q), B(Q+1), \cdots, B(N)] \qquad (4)$$

the pre-equalization coefficient $a_{kq}$ is solved according to the formula (4),
wherein in step 3, the nonlinear pre-equalization coefficient calculation module calculates the pre-equalization coefficient $a_{kq}$ once every time $T$, and $T$ is less than or equal to 1 minute; and in step 4, the nonlinear pre-equalization implementation module updates the nonlinear pre-equalization response according to the pre-equalization coefficient $a_{kq}$, the G3-PLC baseband data in step 1 is recorded as $\{C(n)\}_{n=1}^{N}$, and the nonlinear pre-equalization response is the formula (5):

$$B(n) = z\big(C(n)\big) = \sum_{k=1}^{K}\sum_{q=0}^{Q-1} a_{kq}C(n-q)^{(k-1)} \qquad (5).$$

5. The nonlinear pre-equalization method for the G3-PLC power carrier line system according to claim 4, wherein the sample number $N$ of the pre-equalization data and the digital signal is 2048, the maximum order $K$ of the nonlinear distortion of amplitudes is 5, and the maximum order $Q$ of the nonlinear distortion of phases is 4.

**Patentansprüche**

1. Vorrichtung für nichtlineare Vorentzerrung für ein G3-PLC-Stromträgerleitungssystem, die an einem Sendeende des G3-PLC-Stromträgerleitungssystems angewendet wird, umfassend ein G3-PLC-Basisbanddatenmodul, ein Implementierungsmodul für nichtlineare Vorentzerrung, ein DA-Digital-Analog-Umwandlungsmodul, ein Modul für nichtlineare Reaktion des lokalen Kanals, ein AD-Analog-Digital-Umwandlungsmodul und ein Berechnungsmodul für nichtlineare Vorentzerrungskoeffizienten, wobei:

das G3-PLC-Basisbanddatenmodul zum Generieren von G3-PLC-Basisbanddaten und zum Senden der G3-PLC-Basisbanddaten an das Implementierungsmodul für nichtlineare Vorentzerrung verwendet wird;
das Implementierungsmodul für nichtlineare Vorentzerrung zum Durchführen einer nichtlinearen Vorentzerrung an den G3-PLC-Basisbanddaten, um Vorentzerrungsdaten zu erhalten, und zum Senden der Vorentzerrungsdaten an das DA-Digital-Analog-Umwandlungsmodul und das Berechnungsmodul für nichtlineare Vorentzerrungskoeffizienten verwendet wird; und eine nichtlineare Vorentzerrungsreaktion des Implementierungsmoduls für nichtlineare Vorentzerrung in der Lage ist, nichtlineare Reaktionsverzerrung, die durch das Modul für nichtlineare Reaktion des lokalen Kanals erzeugt wird, im Voraus auszugleichen;

das DA-Digital-Analog-Umwandlungsmodul zum Umwandeln der Vorentzerrungsdaten in ein analoges Signal und zum Senden des analogen Signals an das Modul für nichtlineare Reaktion des lokalen Kanals verwendet wird;

das Modul für nichtlineare Reaktion des lokalen Kanals zum Filtern, Verstärken und Koppeln des analogen Signals an eine Stromleitung, um ein übertragenes Signal zu erhalten, und zum Senden des übertragenen Signals an das AD-Analog-Digital-Umwandlungsmodul und ein Empfangsende des G3-PLC-Stromträgerleitungssystems verwendet wird;

das AD-Analog-Digital-Umwandlungsmodul zum Umwandeln des übertragenen Signals in ein digitales Signal und zum Senden des digitalen Signals an das Berechnungsmodul für nichtlineare Vorentzerrungskoeffizienten verwendet wird; und

das Berechnungsmodul für nichtlineare Vorentzerrungskoeffizienten zum Berechnen und Erhalten des Vorentzerrungskoeffizienten, entsprechend dem digitalen Eingangssignal und den Vorentzerrungsdaten, und zum Rückführen des Vorentzerrungskoeffizienten an das Implementierungsmodul für nichtlineare Vorentzerrung verwendet wird, wobei der Vorentzerrungskoeffizient zum Durchführen der nichtlinearen Vorentzerrung verwendet wird,

wobei die Vorentzerrungsdaten als $\{B(n)\}_{n=1}^{N}$ aufgezeichnet werden, das digitale Signal als $\{A(n)\}_{n=1}^{N}$ aufgezeichnet wird, $N$ eine Stichprobenzahl der Vorentzerrungsdaten und des digitalen Signals ist, n ein Stichprobenpunkt ist, $1 \leq n \leq N$ ist, der Vorentzerrungskoeffizient als $a_{kq}$ aufgezeichnet wird, k einen nichtlinearen Parameter darstellt, q einen Mehrwegeparameter darstellt, $1 \leq k \leq K$, $0 \leq q \leq Q - 1$ ist, $K$ eine maximale Ordnung der nichtlinearen Verzerrung von Amplituden darstellt, Q eine maximale Ordnung der nichtlinearen Verzerrung von Phasen darstellt, und $1 \leq K \leq 6$, $1 \leq Q \leq 6$ ist;

wobei eine umgekehrte Kurve der nichtlinearen Reaktion des lokalen Kanals als $B(n) = f(A(n))$ aufgezeichnet wird und der in Schritt 3 entsprechend dem digitalen Signal und den Vorentzerrungsdaten erhaltene Vorentzerrungskoeffizient die folgende Formel (1) ist:

$$B(n) = f\big(A(n)\big) = \sum_{k=1}^{K} \sum_{a=0}^{Q-1} a_{kq} A(n - q)^{(k-1)} \quad (1)$$
,

wobei die Formel (1) zur Formel (2) erweitert wird:

$$B(Q) = \sum_{k=1}^{K} \sum_{a=0}^{Q-1} a_{kq} A(Q - q)^{(k-1)}$$

$$B(Q + 1) = \sum_{k=1}^{K} \sum_{q=0}^{Q-1} a_{kq} A(Q + 1 - q)^{(k-1)} \qquad (2)$$

$$B(N) = \sum_{k=1}^{K} \sum_{a=0}^{Q-1} a_{kq} A(N - q)^{(k-1)}$$
,

wobei die Formel (2) als die Formel (3) zusammengefasst wird:

$$[B(Q), B(Q + 1), \cdots, B(N)] = M * \left( \sum_{k=1}^{K} \sum_{a=0}^{Q-1} a_{kq} \right) \quad (3)$$
,

wobei die Matrix M eine Matrix ist, die aus dem digitalen Signal $\{A(n)\}_{n=1}^{N}$ entsprechend der Formel (2) zusammengesetzt ist, mit einer Größe von *(N-Q)\*(K\*Q)*;
wobei die Formel (3) umgeformt wird, um die Formel (4) zu erhalten:

$$\sum_{k=1}^{K}\sum_{q=0}^{Q-1} a_{kq} = ((M^T M)^{-1} M^T) * [B(Q), B(Q+1), \cdots, B(N)] \quad (4)$$

,

wobei der Vorentzerrungskoeffizient $a_{kq}$ entsprechend der Formel (4) gelöst wird,
wobei das Berechnungsmodul für nichtlineare Vorentzerrungskoeffizienten den Vorentzerrungskoeffizienten $a_{kq}$ einmal jedes Mal *T* berechnet und *T* kleiner oder gleich 1 Minute ist; und das Implementierungsmodul für nichtlineare Vorentzerrung die nichtlineare Vorentzerrungsreaktion entsprechend dem Vorentzerrungskoeffizienten $a_{kq}$ aktualisiert, wobei die G3-PLC-Basisbanddaten als $\{C(n)\}_{n=1}^{N}$ aufgezeichnet werden und die nichtlineare Vorentzerrungsreaktion die Formel (5) ist:

$$B(n) = z\big(C(n)\big) = \sum_{k=1}^{K}\sum_{q=0}^{Q-1} a_{kq} C(n-q)^{(k-1)} \quad (5).$$

2. Vorrichtung für die nichtlineare Vorentzerrung für das G3-PLC-Stromträgerleitungssystem nach Anspruch 1, wobei das Modul für nichtlineare Reaktion des lokalen Kanals einen analogen Filter am Sendeende, einen Leitungstreiber und eine lokale Sendestromleitung umfasst und das analoge Signal zur Signalfilterung in den analogen Filter am Sendeende eingegeben wird, um Störsignale außerhalb des Bandes herauszufiltern und das gefilterte analoge Signal zu erhalten; wobei das gefilterte analoge Signal zur Signalverstärkung in den Leitungstreiber eingegeben wird, um das verstärkte analoge Signal zu erhalten; und wobei das verstärkte analoge Signal mit der lokalen Sendestromleitung gekoppelt wird, um ein übertragenes Signal zu erhalten.

3. Vorrichtung für die nichtlineare Vorentzerrung für das G3-PLC-Stromträgerleitungssystem nach Anspruch 1, wobei die vom Modul für nichtlineare Reaktion des lokalen Kanals erzeugte nichtlineare Reaktionsverzerrung eine nichtlineare Verzerrung des analogen Filters am Sendeende, eine nichtlineare Verzerrung des Leitungstreibers und eine durch Lastfehlanpassung der lokalen Sendestromleitung erzeugte nichtlineare Verzerrung umfasst, und die nichtlineare Verzerrung eine nichtlineare Verzerrung von Amplituden, Phasen und Mehrwegen umfasst.

4. Verfahren für nichtlineare Vorentzerrung für ein G3-PLC-Stromträgerleitungssystem, umfassend die folgenden Schritte:

Schritt 1: Ausführen einer nichtlinearen Vorentzerrung an G3-PLC-Basisbanddaten, um Vorentzerrungsdaten zu erhalten;
Schritt 2: Umwandeln der Vorentzerrungsdaten in ein analoges Signal und Senden des analogen Signals an ein Modul für nichtlineare Reaktion des lokalen Kanals, um ein übertragenes Signal zu erhalten;
Schritt 3: Umwandeln des übertragenen Signals in ein digitales Signal und Senden des digitalen Signals an ein Berechnungsmodul für nichtlineare Vorentzerrungskoeffizienten; und Berechnen eines Vorentzerrungskoeffizienten entsprechend dem digitalen Signal und den Vorentzerrungsdaten; und
Schritt 4: Rückführen des Vorentzerrungskoeffizienten an ein Implementierungsmodul für nichtlineare Vorentzerrung, um eine nichtlineare Vorentzerrungsreaktion zu erhalten,

wobei die Vorentzerrungsdaten in Schritt 1 als $\{B(n)\}_{n=1}^{N}$ aufgezeichnet werden, das digitale Signal in Schritt 3 als $\{A(n)\}_{n=1}^{N}$ aufgezeichnet wird, *N* eine Stichprobenzahl der Vorentzerrungsdaten und des digitalen Signals ist, n ein Stichprobenpunkt ist, $1 \leq n \leq N$ ist, der Vorentzerrungskoeffizient als $a_{kq}$ aufgezeichnet wird, k einen nichtlinearen Parameter darstellt, q einen Mehrwegeparameter darstellt, $1 \leq k \leq K$, $0 \leq q \leq Q-1$ ist, *K* eine maximale Ordnung der nichtlinearen Verzerrung von Amplituden darstellt, Q eine maximale Ordnung der nichtlinearen Verzerrung von Phasen darstellt und $1 \leq K \leq 6$, $1 \leq Q \leq 6$ ist;
wobei eine umgekehrte Kurve der nichtlinearen Reaktion des lokalen Kanals als *B(n) = f(A(n))* aufgezeichnet wird und der in Schritt 3 entsprechend dem digitalen Signal und den Vorentzerrungsdaten erhaltene Vorentzerrungskoeffizient die Formel (1) ist:

$$B(n) = f\big(A(n)\big) = \sum_{k=1}^{K}\sum_{a=0}^{Q-1} a_{kq}A(n-q)^{(k-1)} \quad (1)$$

,

wobei die Formel (1) zur Formel (2) erweitert wird:

$$B(Q) = \sum_{k=1}^{K}\sum_{a=0}^{Q-1} a_{kq}A(Q-q)^{(k-1)}$$

$$B(Q+1) = \sum_{k=1}^{K}\sum_{q=0}^{Q-1} a_{kq}A(Q+1-q)^{(k-1)} \qquad (2)$$

$$B(N) = \sum_{k=1}^{K}\sum_{a=0}^{Q-1} a_{kq}A(N-q)^{(k-1)}$$

,

wobei die Formel (2) als die Formel (3) zusammengefasst wird:

$$[B(Q), B(Q+1), \cdots, B(N)] = M * \left(\sum_{k=1}^{K}\sum_{a=0}^{Q-1} a_{kq}\right) \quad (3)$$

,

wobei die Matrix *M* eine Matrix ist, die aus dem digitalen Signal $\{A(n)\}_{n=1}^{N}$ entsprechend der Formel (2) zusammengesetzt ist, mit einer Größe von *(N-Q)\*(K\*Q)*;
wobei die Formel (3) umgeformt wird, um die Formel (4) zu erhalten:

$$\sum_{k=1}^{K}\sum_{q=0}^{Q-1} a_{kq} = ((M^{T}M)^{-1}M^{T}) * [B(Q), B(Q+1), \cdots, B(N)] \quad (4)$$

,

wobei der Vorentzerrungskoeffizient $a_{kq}$ entsprechend der Formel (4) gelöst wird,
wobei in Schritt 3 das Berechnungsmodul für nichtlineare Vorentzerrungskoeffizienten den Vorentzerrungskoeffizienten $a_{kq}$ einmal jedes Mal *T* berechnet und *T* kleiner oder gleich 1 Minute ist; und in Schritt 4 das Implementierungsmodul für nichtlineare Vorentzerrung die nichtlineare Vorentzerrungsreaktion entsprechend dem Vorentzerrungskoeffizienten $a_{kq}$ aktualisiert, wobei die G3-PLC-Basisbanddaten in Schritt 1 als $\{C(n)\}_{n=1}^{N}$ aufgezeichnet werden und die nichtlineare Vorentzerrungsreaktion die Formel (5) ist:

$$B(n) = z\big(C(n)\big) = \sum_{k=1}^{K}\sum_{q=0}^{Q-1} a_{kq}C(n-q)^{(k-1)} \quad (5).$$

5. Verfahren für nichtlineare Vorentzerrung für das G3-PLC-Stromträgerleitungssystem nach Anspruch 4, wobei die Stichprobenzahl *N* der Vorentzerrungsdaten und des digitalen Signals 2048 beträgt, die maximale Ordnung *K* der nichtlinearen Verzerrung der Amplituden 5 beträgt und die maximale Ordnung Q der nichtlinearen Verzerrung der Phasen 4 beträgt.

**Revendications**

1. Dispositif de pré-égalisation non linéaire pour un système de courants porteurs en ligne G3-PLC appliqué à une extrémité de transmission du système de courants porteurs en ligne G3-PLC, comprenant un module de données en bande de base G3-PLC, un module d'implémentation de pré-égalisation non linéaire, un module de conversion numérique-analogique DA, un module de réponse non linéaire de canal local, un module de conversion analogique-numérique AD et un module de calcul de coefficient de pré-égalisation non linéaire, dans lequel :

le module de données en bande de base G3-PLC est utilisé pour générer des données en bande de base G3-PLC et envoyer les données en bande de base G3-PLC au module d'implémentation de pré-égalisation non linéaire ; le module d'implémentation de pré-égalisation non linéaire est utilisé pour effectuer une pré-égalisation non linéaire sur les données de bande de base G3-PLC pour obtenir des données de pré-égalisation, et envoyer les données de pré-égalisation au module de conversion numérique-analogique DA et au module de calcul de coefficient de pré-égalisation non linéaire ; et une réponse de pré-égalisation non linéaire du module d'implémentation de pré-égalisation non linéaire est capable de compenser à l'avance la distorsion de réponse non linéaire générée par le module de réponse non linéaire de canal local ; le module de conversion numérique-analogique DA est utilisé pour convertir les données de pré-égalisation en un signal analogique et envoyer le signal analogique au module de réponse non linéaire de canal local ; le module de réponse non linéaire de canal local est utilisé pour filtrer, amplifier et coupler le signal analogique à une ligne d'alimentation pour obtenir un signal transmis, et envoyer le signal transmis au module de conversion analogique-numérique AD et à une extrémité de réception du système de courants porteurs en ligne G3-PLC ; le module de conversion analogique-numérique AD est utilisé pour convertir le signal transmis en un signal numérique et envoyer le signal numérique au module de calcul de coefficient de pré-égalisation non linéaire ; et le module de calcul de coefficient de pré-égalisation non linéaire est utilisé pour calculer et obtenir le coefficient de pré-égalisation en fonction du signal numérique d'entrée et des données de pré-égalisation, et renvoyer le coefficient de pré-égalisation au module d'implémentation de pré-égalisation non linéaire, dans lequel le coefficient de pré-égalisation est utilisé pour effectuer la pré-égalisation non linéaire,

dans lequel les données de pré-égalisation sont enregistrées comme $\{B(n)\}_{n=1}^{N}$, le signal numérique est enregistré comme $\{A(n)\}_{n=1}^{N}$, $N$ est un nombre d'échantillons des données de pré-égalisation et du signal numérique, $n$ est un point d'échantillonnage, $1 \leq n \leq N$, le coefficient de pré-égalisation est enregistré comme $a_{kq}$, $k$ représente un paramètre non linéaire, $q$ représente un paramètre multi-trajet, $1 \leq k \leq K$, $0 \leq q \leq Q - 1$, $K$ représente un ordre maximal de la distorsion non linéaire des amplitudes, Q représente un ordre maximal de la distorsion non linéaire des phases, et $1 \leq K \leq 6, 1 \leq Q \leq 6$ ; une courbe inverse de la réponse non linéaire de canal local est enregistrée comme $B(n) = f(A(n))$, et le coefficient de pré-égalisation obtenu à l'étape 3 en fonction du signal numérique et des données de pré-égalisation est la formule (1) :

$$B(n) = f\big(A(n)\big) = \sum_{k=1}^{K}\sum_{q=0}^{Q-1} a_{kq}A(n-q)^{(k-1)} \quad (1)$$

la formule (1) est développée dans la formule (2) :

$$B(Q) = \sum_{k=1}^{K}\sum_{q=0}^{Q-1} a_{kq}A(Q-q)^{(k-1)}$$

$$B(Q+1) = \sum_{k=1}^{K}\sum_{q=0}^{Q-1} a_{kq}A(Q+1-q)^{(k-1)} \qquad (2)$$

$$B(N) = \sum_{k=1}^{K}\sum_{q=0}^{Q-1} a_{kq}A(N-q)^{(k-1)}$$

la formule (2) est consolidée comme la formule (3) :

$$[B(Q), B(Q+1), \cdots, B(N)] = M * (\sum_{k=1}^{K} \sum_{a=0}^{Q-1} a_{kq}) \quad (3)$$

dans laquelle, la matrice *M* est une matrice composée du signal numérique $\{A(n)\}_{n=1}^{N}$ selon la formule (2), avec une taille de *(N-Q)\*(K\*Q)* ;
la formule (3) est transformée pour obtenir la formule (4) :

$$\sum_{k=1}^{K} \sum_{q=0}^{Q-1} a_{kq} = ((M^T M)^{-1} M^T) * [B(Q), B(Q+1), \cdots, B(N)] \quad (4)$$

le coefficient de pré-égalisation $a_{kq}$ est résolu selon la formule (4),
dans laquelle le module de calcul de coefficient de pré-égalisation non linéaire calcule le coefficient de pré-égalisation $a_{kq}$ une fois à chaque fois temps *T,* et *T* est inférieur ou égal à 1 minute ; et le module d'implémentation de pré-égalisation non linéaire met à jour la réponse de pré-égalisation non linéaire en fonction du coefficient de pré-égalisation $a_{kq}$, les données de bande de base G3-PLC sont enregistrées en tant que $\{C(n)\}_{n=1}^{N}$ , et la réponse de pré-égalisation non linéaire est la formule (5) :

$$B(n) = z(C(n)) = \sum_{k=1}^{K} \sum_{q=0}^{Q-1} a_{kq} C(n-q)^{(k-1)} \quad (5).$$

**2.** Dispositif de pré-égalisation non linéaire pour le système de courants porteurs en ligne G3-PLC selon la revendication 1, dans lequel le module de réponse non linéaire de canal local comprend un filtre analogique d'extrémité de transmission, un module de commande de ligne et une ligne d'alimentation de transmission locale, et le signal analogique est entré dans le filtre analogique d'extrémité de transmission pour le filtrage du signal, de manière à filtrer les signaux parasites hors bande et obtenir le signal analogique filtré ; entrer le signal analogique filtré dans le module de commande de ligne pour l'amplification du signal pour obtenir le signal analogique amplifié ; et coupler le signal analogique amplifié à la ligne d'alimentation de transmission locale pour obtenir un signal transmis.

**3.** Dispositif de pré-égalisation non linéaire pour le système de courants porteurs en ligne G3-PLC selon la revendication 1, dans lequel la distorsion de réponse non linéaire générée par le module de réponse non linéaire du canal local comprend une distorsion non linéaire du filtre analogique d'extrémité de transmission, une distorsion non linéaire du module de commande de ligne et une distorsion non linéaire générée par une inadéquation de charge de la ligne d'alimentation de transmission locale, et la distorsion non linéaire comprend une distorsion non linéaire des amplitudes, des phases et des trajets multiples.

**4.** Procédé de pré-égalisation non linéaire pour un système de courants porteurs en ligne G3-PLC, comprenant les étapes suivantes :

étape 1 : réalisation d'une pré-égalisation non linéaire sur les données en bande de base G3-PLC pour obtenir des données de pré-égalisation ;
étape 2 : conversion des données de pré-égalisation en un signal analogique et envoi du signal analogique à un module de réponse non linéaire de canal local pour obtenir un signal transmis ;
étape 3 : conversion du signal transmis en un signal numérique et envoi du signal numérique à un module de calcul de coefficient de pré-égalisation non linéaire ; et calcul d'un coefficient de pré-égalisation en fonction du signal numérique et des données de pré-égalisation ; et
étape 4 : renvoi du coefficient de pré-égalisation à un module d'implémentation de pré-égalisation non linéaire pour obtenir une réponse de pré-égalisation non linéaire,

dans lequel les données de pré-égalisation à l'étape 1 sont enregistrées en tant que $\{B(n)\}_{n=1}^{N}$ , le signal numérique à l'étape 3 est enregistré en tant que $\{A(n)\}_{n=1}^{N}$ , *N* est un nombre d'échantillons des données de pré-égalisation et du signal numérique, n est un point d'échantillonnage, $1 \leq n \leq N$, le coefficient de pré-égalisation est enregistré en tant que $a_{kq}$, $k$ représente un paramètre non linéaire, $q$ représente un paramètre multi-trajets, $1 \leq k \leq K$, $0 \leq q \leq Q - 1$, $K$ représente un ordre maximal de la distorsion non linéaire des amplitudes, Q représente un ordre maximal de la distorsion non linéaire des phases, et $1 \leq K \leq 6, 1 \leq Q \leq 6$ ;

une courbe inverse de la réponse non linéaire de canal local est enregistrée en tant que $B(n) = f(A(n))$, et le coefficient de pré-égalisation obtenu à l'étape 3 en fonction du signal numérique et des données de pré-égalisation est la formule (1) :

$$B(n) = f\big(A(n)\big) = \sum_{k=1}^{K} \sum_{a=0}^{Q-1} a_{kq} A(n-q)^{(k-1)} \quad (1)$$

la formule (1) est développée dans la formule (2) :

$$B(Q) = \sum_{k=1}^{K} \sum_{a=0}^{Q-1} a_{kq} A(Q-q)^{(k-1)}$$

$$B(Q+1) = \sum_{k=1}^{K} \sum_{q=0}^{Q-1} a_{kq} A(Q+1-q)^{(k-1)} \qquad (2)$$

$$B(N) = \sum_{k=1}^{K} \sum_{a=0}^{Q-1} a_{kq} A(N-q)^{(k-1)}$$

la formule (2) est consolidée comme la formule (3) :

$$[B(Q), B(Q+1), \cdots, B(N)] = M * \big(\sum_{k=1}^{K} \sum_{a=0}^{Q-1} a_{kq}\big) \quad (3)$$

dans laquelle, la matrice $M$ est une matrice composée du signal numérique $\{A(n)\}_{n=1}^{N}$ selon la formule (2), avec une taille de $(N-Q)*(K*Q)$ ;

la formule (3) est transformée pour obtenir la formule (4) :

$$\sum_{k=1}^{K} \sum_{q=0}^{Q-1} a_{kq} = ((M^T M)^{-1} M^T) * [B(Q), B(Q+1), \cdots, B(N)] \quad (4)$$

le coefficient de pré-égalisation $a_{kq}$ est résolu selon la formule (4),

dans laquelle, à l'étape 3, le module de calcul de coefficient de pré-égalisation non linéaire calcule le coefficient de pré-égalisation $a_{kq}$ une fois à chaque temps $T$, et $T$ est inférieur ou égal à 1 minute ; et à l'étape 4, le module d'implémentation de pré-égalisation non linéaire met à jour la réponse de pré-égalisation non linéaire en fonction du coefficient de pré-égalisation $a_{kq}$, les données de bande de base G3-PLC à l'étape 1 sont enregistrées en tant que $\{C(n)\}_{n=1}^{N}$, et la réponse de pré-égalisation non linéaire est la formule (5) :

$$B(n) = z\big(C(n)\big) = \sum_{k=1}^{K} \sum_{q=0}^{Q-1} a_{kq} C(n-q)^{(k-1)} \quad (5).$$

**5.** Procédé de pré-égalisation non linéaire pour le système de courants porteurs en ligne G3-PLC selon la revendication 4, dans lequel le nombre d'échantillons N des données de pré-égalisation et du signal numérique est de 2048, l'ordre maximal K de la distorsion non linéaire des amplitudes est de 5, et l'ordre maximal Q de la distorsion non linéaire des phases est de 4.

| G3-PLC baseband data module | → | Nonlinear pre-equalization implementation module | → | DA digital-to-analogue conversion module | → | Local channel nonlinear response module | → |

Nonlinear pre-equalization coefficient calculation module ← AD analogue-to-digital conversion module

FIG. 1

Start

↓

Carry out nonlinear pre-equalization on G3-PLC baseband data

↓

Convert the pre-equalization data into an analog signal, and send the analog signal to a local channel nonlinear response module to obtain a transmitted signal

↓

Convert the transmitted signal into a digital signal, and send the digital signal to a nonlinear pre-equalization coefficient calculation module; and calculate a pre-equalization coefficient according to the digital signal and the pre-equalization data

↓

Feed the pre-equalization coefficient back to a nonlinear pre-equalization implementation module to obtain a nonlinear pre-equalization response

↓

End

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019181895 A

- US 2014313946 A1